# EUROPEAN PATENT APPLICATION

(11) **EP 1 890 465 A1**
(43) Date of publication of application: **20.02.2008**
(21) Application number: 07253165.0
(22) Date of filing: 13.08.2007
(51) Int. Cl.: H04L 29/06

(54) **User imput streaming media purchase system**

(30) Priority: 17.08.2006 US 465193
(71) Applicant: Ascalade Communications Inc., Richmond, BC V6W 1K7 (CA)
(72) Inventor: Chaplin, Kevin M., Vancouver British Columbia V5K 1E8 (CA)
(74) Representative: Legg, Cyrus James Grahame

(57) **Abstract**

A media appliance for receiving streaming media content from the Internet includes a user activatable buy button to permit user purchase of selected media content. User operation of the buy button communicates with a media materials agent to obtain identification of the media content and determine the availability of a distributable copy of the media content. Where a distributable copy is available, purchase of a copy of the media is facilitated by an authentication and payment agent which arranges delivery of the copy of the media content to a user in real time, via email or other user defined arrangement.

## Description

### FIELD OF THE INVENTION

This invention relates to apparatus and method to facilitate purchase over the Internet and more particularly relates to a user appliance and computer systems to facilitate a real-time context sensitive purchase transaction over computer network such as the Internet.

### BACKGROUND OF THE INVENTION

The Internet provides a popular mechanism for exchange of communications between a source of information located virtually anywhere in the world and to a user of that information operating an appliance to access the Internet such as a personal computer. The Internet supports a wide variety of data traffic protocols and content payloads that facilitate delivery of data from a source anywhere on the Internet to a user wishing to obtain that information. Consequently, the Internet supported protocols provide for transport of data payloads between an information provider and a recipient of that information. For example, a common protocol used is the hypertext transfer protocol (HTTP) which is in common use to exchange information between consumers who operate a client application on their Internet access device, such as a PC, to accomplish a variety of tasks over the Internet including obtaining information about a company or participation in various messaging and chat services with other individuals as well as day-to-day functions, such as, paying bills, using banking websites to name a few such activities.

Other protocols are in use as well and the number of protocols that are available is continually expanding. One form of information source that is available on the Internet is a copy of a broadcast made by a television station or network or a radio broadcast made by a radio station or network. Typically, these information sources are provided in real-time concurrent with the broadcast. These types of information sources are commonly referred to as streaming media since the user connects to the Internet version of the broadcast programming to obtain a real time copy of the broadcast but sent to the user over the Internet network, which allows delivery of the programming to expand to include the reach of the Internet itself. The programming source generally makes arrangements to provide a feed of the programming to a conversion service which makes the broadcast appearing on conventional broadcast distribution media also available to Internet users using the streaming media communications capabilities of the Internet. Generally a user that wishes to obtain broadcast programming or streaming from the Internet is provided with a client application to select and receive the broadcast that the user desires. The variety of the streaming media, client applications are available including Windows Media^{™} Real Audio^{™} Apple iTunes and others.

### SUMMARY OF THE INVENTION

The subject invention provides a mechanism to facilitate online media purchase by obtaining information identifying a streaming media source selected by a user and providing a user with an authentication process facilitating a simple one button or single interaction user input device to purchase of media or to receive details of media and a purchase mechanism for the user.

In one of its aspects, the invention provides a method for delivery of a distributable copy of Internet streaming media content including the steps of providing a media appliance to receive streaming media data from the Internet having a user activatable buy button; receiving a user specified media data stream from the Internet, in response to user activation of the buy button determining the availability of a distributable copy of media content and arranging delivery of a distributable copy of said media content. The invention also provides a system for delivery of a distributable copy of Internet streaming media content and a media appliance as defined in the appended claims.

In one implementation of the invention, the step of determining the availability of a distributable copy of media content includes the steps of obtaining a unique identification of the media content from a source selection agent and providing the unique identification to an online media materials agent. The online media materials agent then provides an availability reponse for the selected media content. The step of arranging delivery includes the steps of obtaining authentication from an authentication and payment agent and then providing a distributable copy of said media content. The distributable copy of the media content can be provided in a variety of ways, such as to a user space authorized by the authentication and payment agent, or to an email server authorized by the authentication and payment agent or even as an immediate download to a user media appliance.

### BRIEF DESCRIPTION OF THE DRAWINGS

Embodiments of the present invention will now be described, by way of example only, with reference to the attached Figures, wherein:
Fig. 1 is a functional block diagram of a distributed services embodiment of the invention.
Fig. 2 is a functional block diagram of a user centralized services implementation of the invention.

### DETAILED DESCRIPTION

In the following description, for purposes of explanation, numerous details are set forth in order to provide a thorough understanding of the present invention. However, it will be apparent to one skilled in the art that these specific details are not required in order to practice the present invention. In other instances, well-known electrical structures and circuits are shown in block diagram form in order not to obscure the present invention. For example, specific details are not provided as to whether the embodiments of the invention described herein are implemented as a software routine, hardware circuit, firmware, or a combination thereof.

Embodiments of the invention may be represented as a software product stored on a machine-readable medium (also referred to as a computer-readable medium, a processor-readable medium, or a computer usable medium having a computer readable program code embodied therein). The machine-readable medium may be any type of magnetic, optical, or electrical storage medium including a diskette, compact disk read only memory (CD-ROM), memory device (volatile or non-volatile), or similar storage mechanism. The machine-readable medium may contain various sets of instructions, code sequences, configuration information, or other data, which, when executed, cause a processor to perform steps in a method according to an embodiment of the invention. Those of ordinary skill in the art will appreciate that other instructions and operations necessary to implement the described invention may also be stored on the machine-readable medium. Software running from the machine readable medium may interface with circuitry to perform the described tasks.

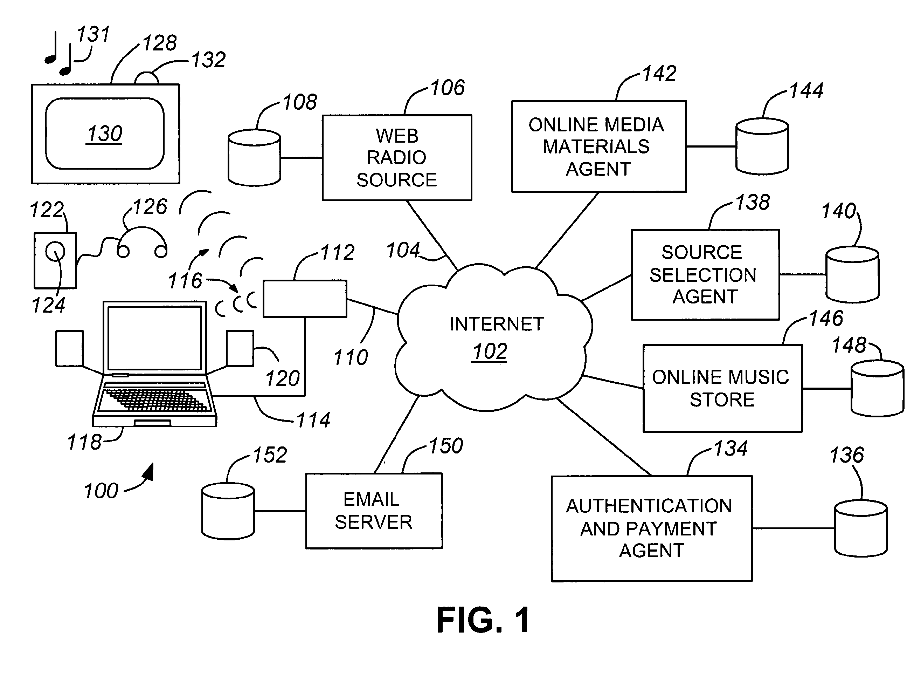

Referring now to Figure 1, user premise equipment, generally depicted by reference numeral 100, is used to access the Internet 102 to obtain information in streaming media data form from the Internet. One form of information obtained is a streaming media feed 104 from a web radio source 106. The web radio source may provide programming delivered only to the Internet or may provide a simulcast copy of a conventional broadcast by a radio station on the AM or FM radio waves. With the advent of Internet radio, there are a number of radio stations that have come into operation which do nothing more than provide programming into the Internet without a simultaneous broadcast of that programming onto a conventional radio wave broadcast whether by AM/FM radio or satellite radio. The radio service or media source 106 includes all variety of programming such as dialog between a talk show host and a guest or broadcast of music from a music library 108. The streaming audio media 104 is delivered to the user premise equipment 100 over an Internet connection 110 that the Internet user uses to access the Internet. In the embodiment shown in Figure 1, the Internet connection 110 is sent to a router 112 which distributes the Internet connection to the user premise equipment in a variety of manners including delivery over a wired media 114, which typically carries data traffic therealong using the Ethernet protocol. Other distribution mechanisms to interconnect to the Internet include a wireless connection 116 and standards exist for such wireless connections, such as the WiFi^{™} standard, which permits the radio equipment to inter-operate with equipment from a variety of manufacturers including a wirelessly equipped personal computer 118. The PC 118 has conventional user input and output apparatus including a keyboard, mouse for user input and a display and audio speakers 120 to provide audio output. In this fashion the user of the PC 118 can listen to audio broadcasts over the speakers 120. The PC can be configured with a client to allow the PC to swap media files with a portable electronic device 122 having a display 124 and audio headphones 126. In accordance with a preferred embodiment a media appliance 128 is also used, which is a special purpose computer having a display 130 that may be touch sensitive to provide a user input mechanism and includes speakers to produce an audio output 131. The media appliance 128 includes a user buy button 132 to facilitate capture of user input to purchase media selections in the manner hereinafter described.

The user authenticates his or her identity to a remote authentication server 134 which has a data base of user data 136 for each user that is a member of the service. Preferably the remote authentication server provides a plurality of services to the user, some of which are maintained in a private user data space 136. For example the services can include Microsoft Instant Messenger^{™} service, an AOL or Google chat service and/or other user or instant messaging services that are available on the Internet. In accordance with a preferred arrangement of the invention, the user has a payment arrangement established with the service operating the remote authentication server 134 to facilitate verification and billing of the user who is authenticated to the authentication server. Generally this authentication and the establishment of a billing arrangement is for premium services offered by the service provider, which would require the user to have a paid subscription for premium services obtained by or with the authentication server.

In accordance with a distributed services implementation embodiment of the invention, a source selection agent 138 interacts with the client application of the user media appliance 128 (or PC 118) to obtain an indication of the media source selected by the user. Source selection agent 138 maintains a source selection history 140 which is updated with the selections made at the media appliance 128 (or PC 118) that is coupled to the media stream 104 received from the user selected source. In this distributed arrangement, the source selection agent is implemented as a central server and is thus able to determine and track how many listeners there are to a particular media source at any given time. The user may be listening to a song that they wish to purchase.

The user indicates the desire to purchase a song, or selected audio visual media material, by depressing the user buy button 132 of the media appliance. When the user buy button 132 is depressed, the authentication agent 134 receives the request and makes a record of the network identifying information that uniquely identifies the user that has been authenticated to the server. The public information, which in one embodiment of the invention includes the IP address of the Internet connection 110, is provided to the source selection agent. The source selection agent responds to the query by providing the authentication server with the source that is currently being listened to.

The source selection agent obtains a media id of the particular media content that the streaming audio media 104 relates to by providing a query to an online media materials agent 142. At the time the buy request is received, the media materials agent 142 may have a specific media id of the song or the media content that is on the streaming audio media 104. Or, ultimately, supplementary input may be required to determine what the media id is that specifies the selected content of the streaming media source, for example, by examination of the streaming media source 104 over the time frame that the buy request was issued. Once the media id is known, for example the desired song is identified, either instantaneously at the time the request is made or at a later time when the media or song is subsequently located and identified, the media materials agent determines the availability of a distributable copy of the media content by reference to a media data base 144. The media materials agent may itself have a distributable copy of the media content in the media database, that is any media content materials for which it has a distribution authorization from the copyright holder. Alternatively, the online media materials agent 144 may requisition a purchase of the media content, for example, a media broadcast, a song or music track from an online music store 146 that maintains its own library 148 of media content or music tracks that are available for download and purchase from the online music store.

The authentication and payment agent then obtains a copy of the requested media content, either from the online media materials agent 142 or the online music store 146, to satisfy the purchase request made by the user.

Once a copy of the media content is obtained by the authentication and payment agent 134, the copy of the media content is then delivered to the user in the manner the user selects. In one manner of delivery, the purchased media content is delivered to the user data space 136 of the authentication and payment agent. The user can then sign on to the service at any convenient later time to obtain the acquired copy of the media content, e.g. music track. In another manner of delivery, the authentication and payment agent forwards a replica of the media content to an email server 150 for email delivery to the user. And in yet another manner of delivery, the authentication and payment agent generates an email for the user that provides details identifying the media content the user requested and includes instructions for obtaining a copy of the media content which is then queued for delivery by email to the user. And in another manner the media content can be immediately downloaded to the users device 118.

The email server 150 maintains an email data base 152 where email directed to or received from the user subscriber is maintained. As will be understood, the media content purchased by the user is then made available to the user for storage on the PC 118 or the media appliance 128 or maybe duplicated onto the portable electronic device 122. Any number of licensing and copyright protection schemes using a suitable digital rights management framework to protect unauthorized copying of the media content or music obtained by the subscriber may be implemented to insure the digital rights management process authorized by the copyright holder is maintained by the appliances that the user distributes the acquired media content to.

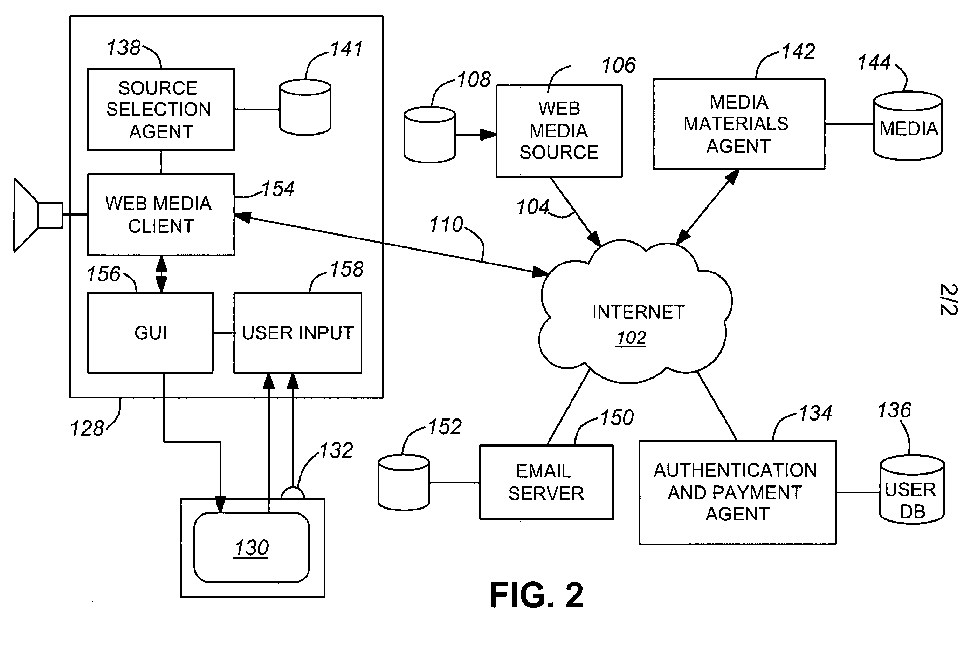

Figure 2 shows a functional block diagram of a user centralized services implementation embodiment of the invention. In this embodiment a source selection agent 138 operates on a the user media appliance 128. The source selection agent interacts with the client media application 154 of the user media appliance 128 (or PC 118, in the arrangement of user premise equipment depicted in Figure 1) to obtain an indication of the media source selected by the user. Source selection agent 138 may maintain a user source selection history 141 which is updated with the selections made by the user on the media appliance 128 (or PC 118) to couple to various media streams, such as media stream 104 received from user selected web media source 106. In this user centralized arrangement, the source selection agent is implemented as a client on each user device. The user may be listening to a song or other media content that they wish to purchase.

The user indicates the desire to purchase a song, or selected audio visual media material, by depressing the user buy button 132 of the media appliance. The user interface is implemented as a graphical user interface (GUI) 156 which provides visually perceptible output on a display 130 which may be touch sensitive. Input from the user is collected from the display by a user input process 158. User input process 158 also monitors the user buy button 132. When the user buy button 132 is depressed, the source selection agent 138 obtains a media id of the particular media content that the streaming media source 104 relates to by providing a query to an online media materials agent 142. At the time the buy request is received, the media materials agent 142 may have a specific media id of the song or the media content that is on the streaming audio media 104. Or, ultimately, supplementary input may be required to determine what the media id is that specifies the selected content of the streaming media source, for example, by examination of the streaming media source 104 over the time frame that the buy request was issued. Once the media id is known, for example the desired song is identified, either instantaneously at the time the request is made or at a later time when the media or song is subsequently located and identified, the media materials agent determines the availability of a distributable copy of the media content by reference to a media data base 144. The media materials agent may itself have a distributable copy of the media content in the media database, that is any media content materials for which it has a distribution authorization from the copyright holder. Alternatively, the online media materials agent 144 may obtain a copy of the media content, for example, a song or music track from an online music store.

When a distributable copy of the media content is available, the media materials agent 142 delivers a copy of the requested media content to the authentication and payment agent 134 for delivery to the user. Once a copy of the media content is received by the authentication and payment agent 134, the copy of the media content is then delivered to the user in the manner the user selects. For example, the purchased media content is delivered to the user data space 136 of the authentication and payment agent which is user can subsequently retrieve at any convenient later time. Alternately the copy of the media content is delivered by email to the user or the user may receive an email that provides details identifying the media content the user requested and giving instructions for obtaining a copy of the desired media content.

Now that the invention has been described with reference to preferred embodiments, numerous modifications and substitutions and equivalent will occur to those skilled in the art. The invention is not limited to the specific embodiments herein described, but rather is defined in the claims appended hereto.

## Claims

1. A method for delivery of a distributable copy of Internet streaming media content comprising the steps of:
(i) providing a media appliance to receive streaming media data from the Internet having a user activatable buy button;
(ii) receiving a user specified media data stream from the Internet;
(iii) determining the availability of a distributable copy of media content in response to user activation of said buy button; and
(iv) arranging delivery of a distributable copy of said media content.

2. The method of claim 1 wherein said step of determining the availability of a distributable copy of media content includes the steps of:
(i) obtaining a unique identification of the media content from a source selection agent;
(ii) providing said unique identification to an online media materials agent; and
(iii) receiving an availability reponse from said media materials agent.

3. The method of claim 1 or claim 2 wherein said step of arranging delivery includes the steps of:
(i) obtaining authentication from an authentication and payment agent;
(ii) providing a distributable copy of said media content to at least one of:
- a user space authorized by said authentication and payment agent;
- an email server authorized by said authentication and payment agent; and
- an immediate download to a user media appliance.

4. The method of any preceding claim comprising making said delivery of a distributable copy of said media content.

5. A system for delivery of a distributable copy of Internet streaming media content comprising:
(i) a media appliance operable to receive a user specified stream of media data from the Internet and having a user activatable buy button;
(ii) a streaming media source connected to the Internet operable to provide the user specified stream of media data to the media appliance;
(iii) a media materials agent operable to determine the availability of a distributable copy of media content in response to user activation of said buy button; and
(iv) means operable to arrange delivery of a distributable copy of said media content.

6. The system of claim 5 wherein the system comprises a source selection agent operable to provide a unique identification of the media content and to provide said unique identification to the media materials agent, and wherein the media materials agent is operable to provide an availability response.

7. The system of claim 5 or claim 6 wherein the means operable to arrange delivery of a distributable copy of said media content comprises:
an authentication and payment agent operable to provide an authentication and to provide a distributable copy of said media content to at least one of:
- a user space authorized by said authentication and payment agent;
- an email server authorized by said authentication and payment agent; and
- an immediate download to a user media appliance.

8. The system of any one of claims 5 to 7 comprising means operable to make said delivery of a distributable copy of said media content.

9. A media appliance operable to receive a user specified stream of media data from the Internet having a user activatable buy button, the appliance being operable to issue via the Internet a request for a distributable copy of the media content.

10. The media appliance of claim 9 further comprising a source selection agent to provide a unique identification of the media content.
